# EUROPEAN PATENT APPLICATION

(11) **EP 1 528 465 A2**
(43) Date of publication of application: **04.05.2005**
(21) Application number: 04025329.6
(22) Date of filing: 25.10.2004
(51) Int. Cl.: G06F 9/445

(54) **Framework to build, deploy, service, and manage customizable and configurable re-usable applications**

(30) Priority: 24.10.2003 US 514069 P; 30.07.2004 US 909217
(71) Applicant: MICROSOFT CORPORATION, Redmond, WA 98052 (US)
(72) Inventor: Canter, Adriaan W., Redmond, Washington 98052 (US); D'Souza, David J., Redmond, Washington 98052 (US); Horstmann, Markus, Redmond, Washington 98052 (US); Grier, Michael J., Redmond, Washington 98052 (US); Shenoy, Sanjay G., Redmond, Washington 98052 (US); Parthasarathy, Srivatsan, Redmond, Washington 98052 (US)
(74) Representative: Grünecker, Kinkeldey, Stockmair & Schwanhäusser Anwaltssozietät

(57) **Abstract**

Disclosed is a framework to build, deploy, service, and manage customizable and configurable re-usable applications. The framework is defined declaratively as a manifest possessing an identity, namely a strong identity. The application manifest can declare appropriate ways to configure or customize the application securely and provides the ability to only grant such a right to authorized parties. A further aspect of the invention provides a framework for an application deployment to be defined declaratively with a manifest possessing an identity of the customized application. Such a framework offers a way for the system, state infrastructure, setup programs, authoring tools, and management tools to deploy, install, service and manage the customized application using an authoritative composite application identity. The application manifest as well as the deployment manifest can be made available through out the lifecycle of the deployed application - including at runtime - which assists in consistent manipulation of the customized application.

## Description

### TECHNICAL FIELD

The present invention relates generally to computer system software applications and, more particularly, to customizable and configurable re-usable applications.

### CROSS-REFERENCE TO RELATED APPLICATIONS

This application claims the benefit of U.S. Provisional Application Ser. No. 60/514,069 filed October 24, 2003.

### BACKGROUND OF THE INVENTION

Today's software applications typically allow for some level of customization and / or configuration. Customization may occur before the application ships from the manufacturer. For example, localized versions of an application (i.e., English, German, Japanese, etc.) may be created by the software developer prior to publication and distribution. Customization can also occur after the user has installed the product, as is the case for a service pack or other software update. Users can also generally configure settings and options within installed software such as color or sound schemes, icons, startup screens, etc.

Often deployers of applications will need to customize and configure the applications they deploy. An Information Technology Administrator, for example, may need to standardize the look and feel and / or feature set of applications that are being used within their network domain. In another example an Internet Service Provider may desire to distribute a branded version of an application for its subscribers. Routinely, this customization is done by modifying the setup of the application or by modifying the state of the deployed application after its setup runs using another custom program. While the resultant state of the machine may in fact now have the application in its customized form, there is no authoritative definition or handle to manipulate this customized application.

The above situation can be problematic as once the application has been customized and has either lost its original application identity and possesses an unrelated new identity, or still has the original identity as opposed to the customized identity, there will be no way to identify the customized application as being a customized variant of the original application. Thus it becomes particularly challenging to ensure that throughout the application's life-cycle (i.e., installing, customizing, updating, executing, and retiring the application) it will be able to be maintained and to function as necessary - according to the original application.

### SUMMARY OF THE INVENTION

In view of the foregoing, the present invention provides a framework to build, deploy, service, and manage customizable and configurable re-usable applications. Specifically, the present invention presents a framework for an application (i.e., a component that controls its execution context and can be activated) to be defined declaratively as a manifest possessing an identity, including but not necessarily, a strong identity (see Application No. 09/605,602, entitled "Shared Names", filed on June 28, 2000 which is herein incorporated in its entirety for everything it describes). The application manifest can declare appropriate ways to configure or customize the application securely and provides the ability to only grant such a right to authorized parties.

A further aspect of the present invention is that is also provides a framework for an application deployment to be defined declaratively as a manifest possessing an identity of the customized application. Such a framework offers a way for the system, state infrastructure, setup programs, authoring tools, management tools and other interested parties to deploy, install, service and manage the customized application using an authoritative composite application identity. The customized application can also be further customized.

The application manifest as well as the deployment manifest can be made available through out the lifecycle of the deployed application - including at runtime - which assists in consistent manipulation of the customized application. The support for allowing multiple such customized applications to be available in the same scope (i.e., user, machine, network, etc.) makes it possible to have true re-usable applications much like side by side components.

### BRIEF DESCRIPTION OF THE DRAWINGS

While the appended claims set forth the features of the present invention with particularity, the invention, together with its objects and advantages, may be best understood from the following detailed description taken in conjunction with the accompanying drawings of which:

Figure 1 is a schematic diagram of an exemplary computer architecture on which the framework of the invention may be implemented;

Figure 2 is a schematic diagram of an exemplary software application on which the framework of the invention may be implemented; and

Figure 3 is a schematic diagram of an exemplary deployment on which the framework of the invention may be implemented.

### DETAILED DESCRIPTION OF THE INVENTION

In the description that follows, the invention is described with reference to acts and symbolic representations of operations that are performed by one or more computers, unless indicated otherwise. As such, it will be understood that such acts and operations, which are at times referred to as being computer-executed, include the manipulation by the processing unit of the computer of electrical signals representing data in a structured form. This manipulation transforms the data or maintains them at locations in the memory system of the computer, which reconfigures or otherwise alters the operation of the computer in a manner well understood by those skilled in the art. The data structures where data are maintained are physical locations of the memory that have particular properties defined by the format of the data. However, while the invention is being described in the foregoing context, it is not meant to be limiting as those of skill in the art will appreciate that several of the acts and operations described hereinafter may also be implemented in hardware.

Turning to the drawings, wherein like reference numerals refer to like elements, the invention is illustrated as being implemented in a suitable computing environment. The following description is based on illustrated embodiments of the invention and should not be taken as limiting the invention with regard to alternative embodiments that are not explicitly described herein.

### I. Exemplary Environment

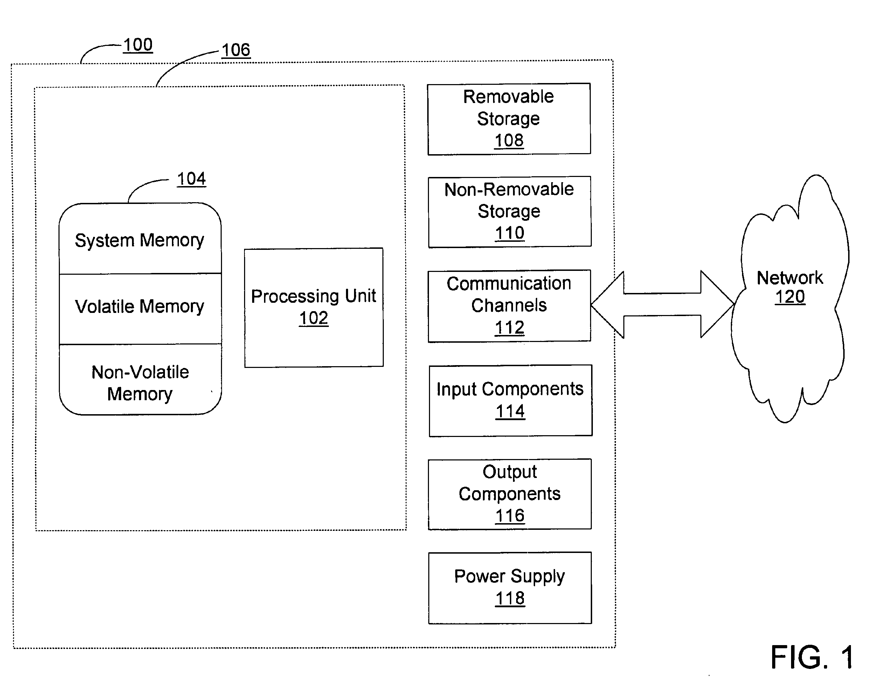

Referring to Figure 1, the present invention relates to communications between network nodes on connected computer networks. Each of the network nodes resides in a computer that may have one of many different computer architectures. For descriptive purposes, Figure 1 shows a schematic diagram of an exemplary computer architecture usable for these devices. The architecture portrayed is only one example of a suitable environment and is not intended to suggest any limitation as to the scope of use or functionality of the invention. Neither should the computing devices be interpreted as having any dependency or requirement relating to any one or combination of components illustrated in Figure 1. The invention is operational with numerous other general-purpose or special-purpose computing or communications environments or configurations. Examples of well known computing systems, environments, and configurations suitable for use with the invention include, but are not limited to, mobile telephones, pocket computers, personal computers, servers, multiprocessor.systems, microprocessor-based systems, minicomputers, mainframe computers, and distributed computing environments that include any of the above systems or devices.

In its most basic configuration, a computing device 100 typically includes at least one processing unit 102 and memory 104. The memory 104 may be volatile (such as RAM), non-volatile (such as ROM and flash memory), or some combination of the two. This most basic configuration is illustrated in Figure 1 by the dashed line 106.

Computing device 100 can also contain storage media devices 108 and 110 that may have additional features and functionality. For example, they may include additional storage (removable and non-removable) including, but not limited to, PCMCIA cards, magnetic and optical disks, and magnetic tape. Such additional storage is illustrated in Figure 1 by removable storage 108 and non-removable storage 110. Computer-storage media include volatile and non-volatile, removable and non-removable media implemented in any method or technology for storage of information such as computer-readable instructions, data structures, program modules, or other data. Memory 104, removable storage 108, and non-removable storage 110 are all examples of computer-storage media. Computer-storage media include, but are not limited to, RAM, ROM, EEPROM, flash memory, other memory technology, CD-ROM, digital versatile disks, other optical storage, magnetic cassettes, magnetic tape, magnetic disk storage, other magnetic storage devices, and any other media that can be used to store the desired information and that can be accessed by the computing device.

Computing device 100 can also contain communication channels 112 that allow it to communicate with other devices. Communication channels 112 are examples of communications media. Communications media typically embody computer-readable instructions, data structures, program modules, or other data in a modulated data signal such as a carrier wave or other transport mechanism and include any information-delivery media. The term "modulated data signal" means a signal that has one or more of its characteristics set or changed in such a manner as to encode information in the signal. By way of example, and not limitation, communications media include wired media, such as wired networks and direct-wired connections, and wireless media such as acoustic, radio, infrared, and other wireless media. The term computer-readable media as used herein includes both storage media and communications media. The computing device 100 may also have input components 114 such as a keyboard, mouse, pen, a voice-input component, and a touch-input device. Output components 116 include screen displays, speakers, printers, and rendering modules (often called "adapters") for driving them. The computing device 100 has a power supply 118. All these components are well known in the art and need not be discussed at length here.

### II. Framework to Build, Deploy, Service, and Manage Customizable and Configurable Re-usable Applications

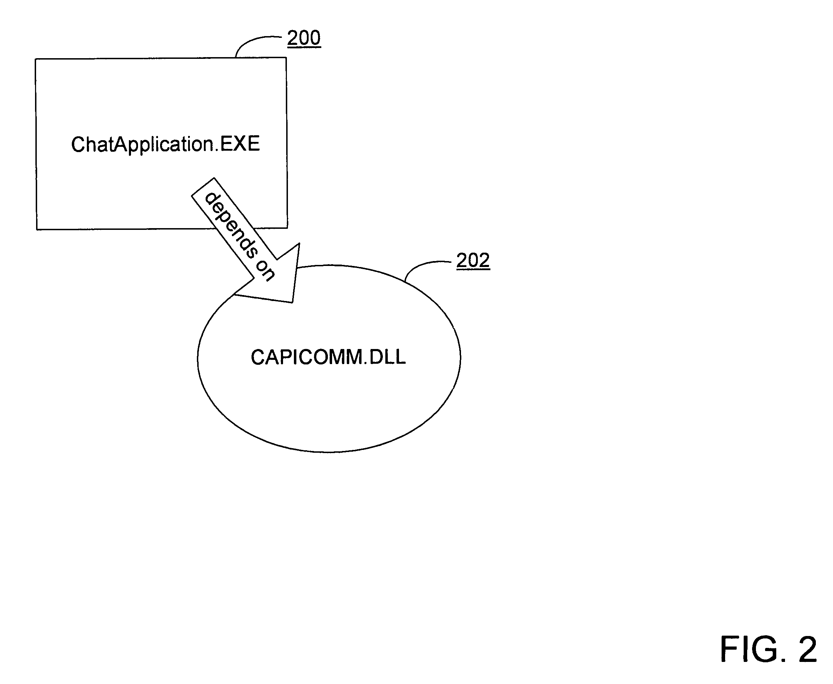

The present invention is directed to a framework to build, deploy, service, and manage customizable and configurable re-usable applications. Simply stated, an application is a set of one of more components that controls its execution context, as permitted by the host, and can be activated. A component may be described as an atomic, immutable set of files. It should be noted that "control" as used here is relative; there are some factors (e.g., machine-wide component servicing / settings, etc.) that even an application cannot control. Also, there are different levels of contexts (e.g., machine, process, appdomain) that provide different guarantees and levels of control and isolation to an application. Additionally, an application need not necessarily be an executable file and may not run in its own process, but rather may run in an application domain. Referring to Figure 2, an exemplary application architecture is illustrated. ChatApplication consists of components ChatApplication.EXE 200 and CAPICOMM.DLL 202.

By employing a shared names scheme (see Application No. 09/605,602, entitled "Shared Names", filed on June 28, 2000 which is herein incorporated in its entirety for everything it describes) a unique identifier for a component - a component identity - can be derived. A component identity comprises the component name, version, and public key token. An application identity can similarly be derived. An application identity is a path through the dependency graph of an application or deployment (i.e., a component that customizes one or more applications establishes a name resolution scope around the applications and other components that it and its applications contain), represented as an ordered list of the component identities of the components along that path. The last component on that path is usually an application.

It is possible to define a manifest for the ChatApplication example. A manifest is an authored document containing meta-data about a component. An effective manifest is a compilation of an application's or deployment's manifest content, including the content of manifests of all its constituent and dependent components, considering (component binding) policy statements that might be in effect on a given system for any of the components. A merged application manifest, on the other hand, is a compilation of an application's or deployment's manifest content including the content of manifests of all its constituent components, not considering any component binding policy and not considering any external / pre-requisite dependencies (i.e., on OS components).

Referring once again to the exemplary application architecture of Figure 2, ChatApplication has a manifest that lists ChatApplication.EXE as a constituent file, including the hash of that file. The manifest also lists CAPICOMM.DLL as a dependency that has to be installed / available in order for ChatApplication.EXE to run. The effective manifest contains, among other things, the identity of ChatApplication.EXE and CAPICOMM.DLL and their file hashes. The merged application manifest consists only of the contents of ChatApplication's manifest. Thus, if CAPICOMM.DLL gets serviced, the effective manifest changes, but the merged application manifest does not change. The application identity is the identity of the ChatApplication.EXE component (trivial single-node path through the dependency graph of ChatApplication.EXE) and - like the merged application manifest - does not change even if CAPICOMM.DLL gets serviced.

In one preferred embodiment, a declarative Extensible Markup Language (XML) based scheme can be employed to implement the application manifest. An exemplary implementation follows:

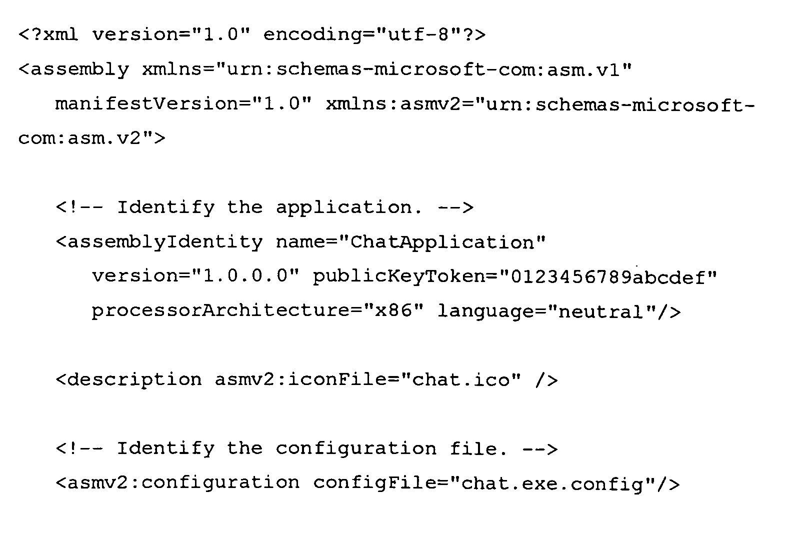

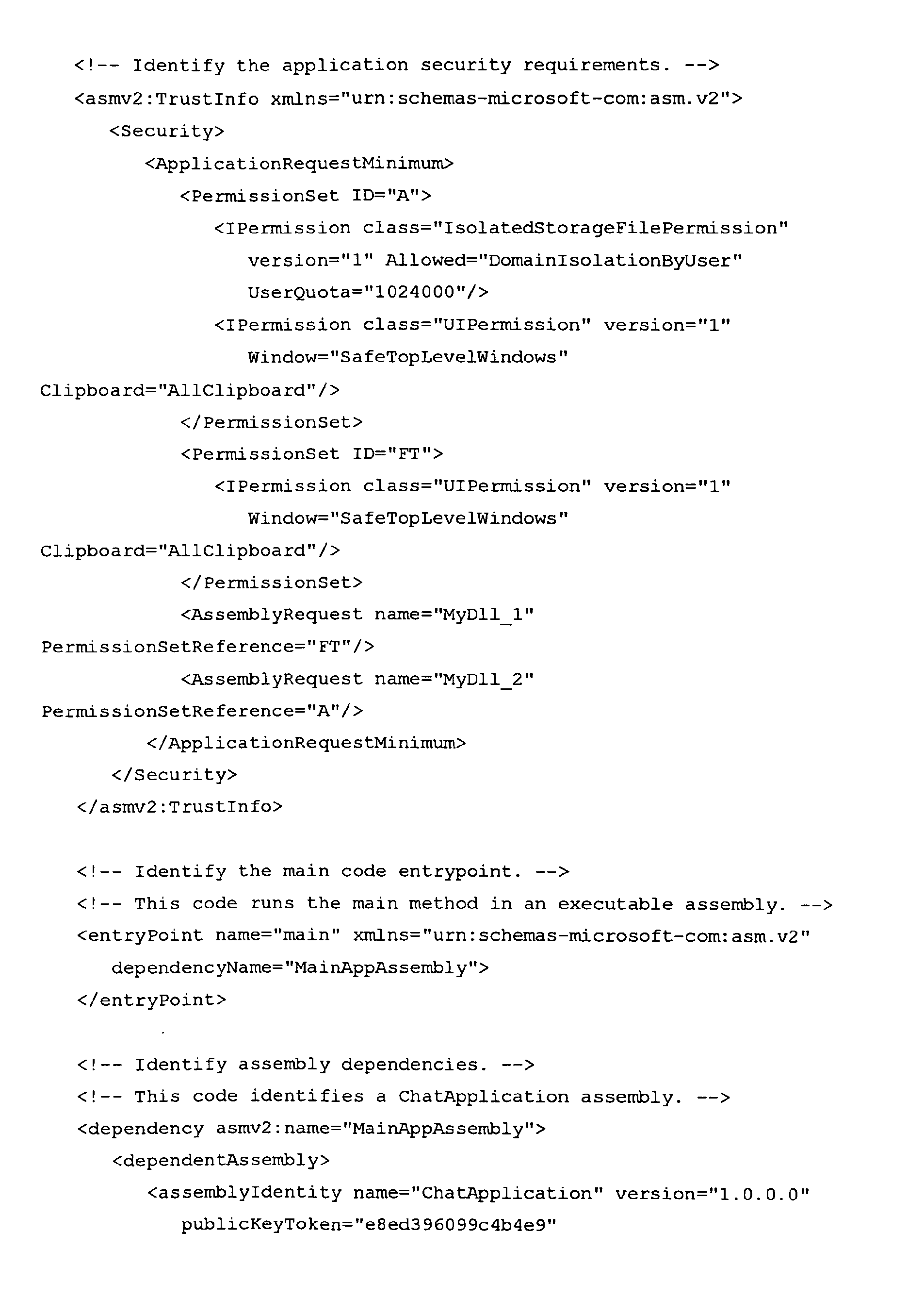

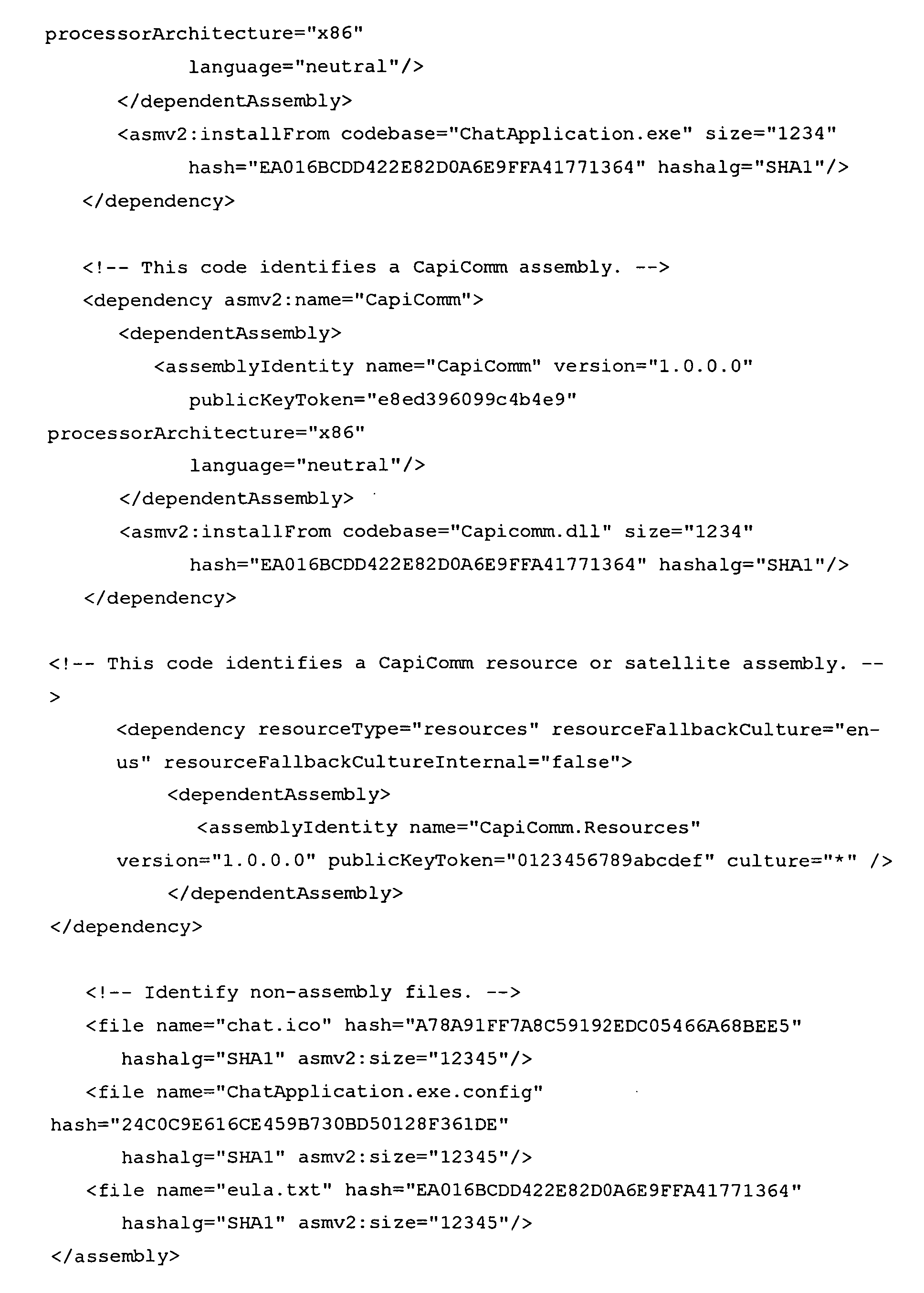

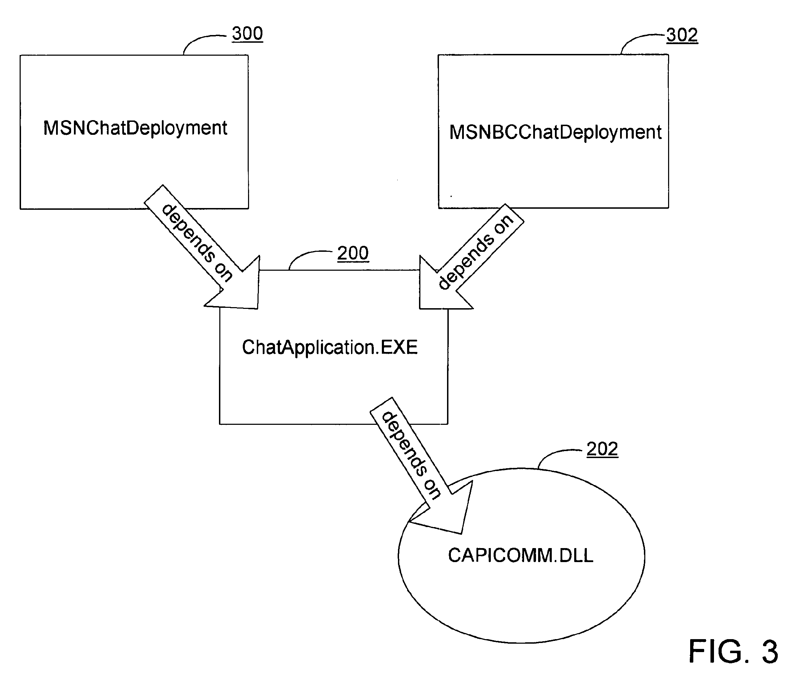

As discussed above, many applications expose settings that allow the application to be substantially customized or even branded. In many scenarios it may even be necessary to allow multiple customizations of the same application to be installed simultaneously on the same machine. The present invention can be particularly useful in overcoming the difficulties associated with achieving such a result by employing the state of the art. Turning to Figure 3, an exemplary deployment scenario is illustrated. In this scenario, ChatApplication is now being customized by two sites / deployers: MSNBC 302 and MSN 300. In order to enable these scenarios, the application identity carries additional information over and beyond the code identity; the customization ("deployment") is assigned an identity of its own (deployment identity) through a separate manifest ("deployment manifest"). One can extend the diagram above to add further customizations to the graph with successive deployment manifests.

In one preferred embodiment, a declarative XML based scheme can be employed to implement the deployment manifest. An exemplary implementation follows:

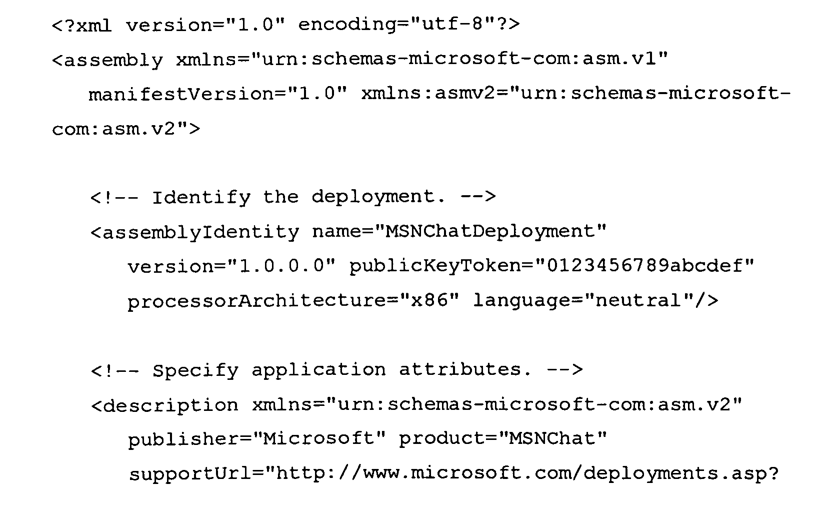

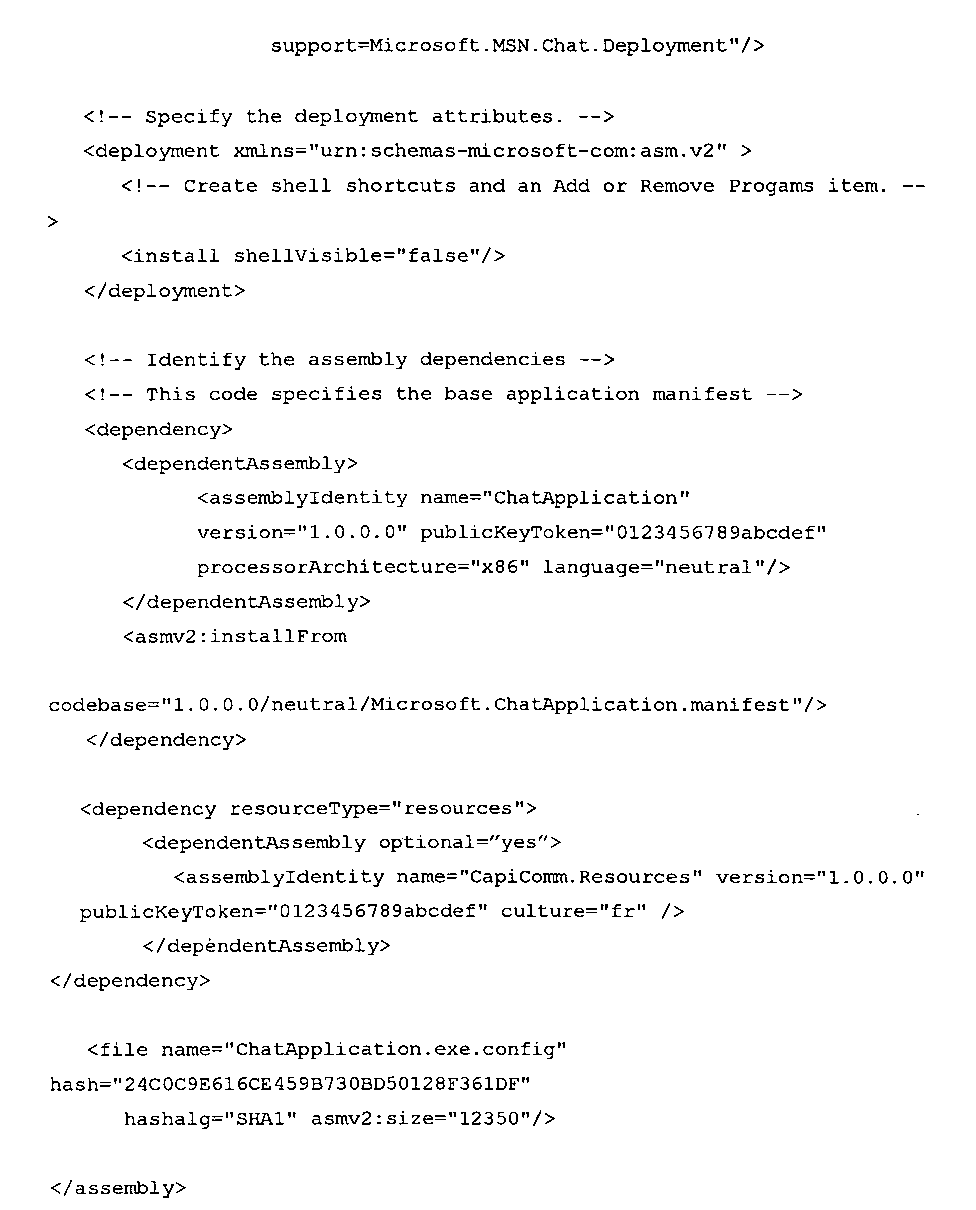

The above example illustrates how MSNChat 300 is able to customize the install and UI experience for ChatApplication so it is branded and looks like it is MSN. It also suggests how MSNChat 300 can configure the application through an overriding configuration file. For example, if the configuration file had a setting BackgroundColor = Blue, then the configuration file provided by the deployment could override this to say BackgroundColor= White. Additionally, this example also shows how Language satellites, such as the French satellite for CapiComm as shown above, can be added.

Finally, the system can use certificates and other rights management technologies to ensure that the deployer only customizes the application in acceptable /application author authorized ways. In the above example a trivial way this is illustrated is that both the application and the deployment have the same 'public key' as evidenced by the public key token attribute in the assembly identity. This ensures that they have a trust relationship.

When the user launches a shortcut, the shortcut will contain the full application identity (AppID). This means that if the application is customized the application identity includes the full identity of the deployment(s) as well as the application. For example:
Converter. deploy, Version=1.0.0.0, Culture=x-ww,
PublicKeyToken=0123456789abcdef, ProcessorArchitecture=x86 / Converter,
Version=1.0.0.0, Culture=x-ww, PublicKeyToken=0123456789abcdef,
ProcessorArchitecture=x86
To resolve such an identity, the binder goes through each segment of the identity and determines whether the component is in sync (i.e., if it is in sync with server semantics) and resolves to the appropriate version of the component if there is a central servicing policy. This process ensures service for each individual component. The application is then launched with the identity in its runtime instance representing the full identity. This may be referred to as AppID. The AppID can be used at runtime by entities such as the state infrastructure, trust manger, etc. in order to allow configurability and manageability of the customized application. Potential operations using the AppID include:
■ Activation: launching an application given an application identity;
■ Security: policy statements about applications use application identity (references) to scope the policy statements to one or more applications;
■ Identification: determining the application identity from within the context of the running application; and
■ Management: determining the applications installed on a system - an application management API returns application identity (definitions); uninstall takes an application identity (definition), etc.

The binder itself can also use the AppID and the set of manifests that are associated with each segment of the ID (the AppID can be used to obtain the "effective manifest" or the "merged application manifest" and thus any data within such structures) in order to provide support to bind to the right version of the assembly or other DLLs, as well as location information for the same, out of the manifest. The binder has the ability to be very selectively in choosing the right binding environment for the customized application. This allows the system to provide a model where one deployment (or customized application) can use versions of components without interfering with other customized versions of the same application or entirely different applications. This scenario relies on the ability of the underlying components to be isolatable.

In view of the many possible embodiments to which the principles of this invention may be applied, it should be recognized that the embodiments described herein with respect to the drawing figures are meant to be illustrative only and should not be taken as limiting the scope of invention. For example, for performance reasons the framework of the present invention may be implemented in hardware, rather than in software. Therefore, the invention as described herein contemplates all such embodiments as may come within the scope of the following claims and equivalents thereof.

## Claims

1. A computer-readable medium having stored thereon an application manifest schema data structure associated with an application, the data structure comprising:
a first data field containing data representing an element indicating the schema contains application manifest information; and
a second data field containing data representing an application identifier.

2. A computer-readable medium having stored thereon a deployment manifest schema data structure associated with a customized application, the data structure comprising:
a first data field containing data representing an element indicating the schema contains deployment manifest information; and;
a second data field containing data representing a customized application identifier.

3. A computer-readable medium having stored thereon an application identifier data structure associated with a customized application, the data structure comprising:
a first data field containing data representing one or more deployment manifest data structures; and;
a second data field containing data representing an application manifest data structure.

4. A method for securely customizing an application, the method comprising:
obtaining a deployment manifest file;
determining from the deployment manifest file available deployment options; and
performing the permitted application customization activity.

5. The method of claim 4, wherein the determining includes determining permitted customization activity.

6. The method of claim 4, wherein the determining includes determining parties authorized to perform an application customization.

7. A method for launching a customized application, the method comprising:
obtaining an application identity;
resolving the application identity;
locating components corresponding to the application identity; and
calling the component to launch the customized application.

8. A method for implementing policy statements about a customized application, the method comprising:
defining an application identity for the customized application; and
scoping policy statements to one or more applications using the application identity.

9. A method for identifying a customized application running within a context, the method comprising:
determining the context of which the customized application is running; and
obtaining the application identity from within the context of the running customized application.

10. A method for determining applications installed on a system, the method comprising:
calling an application management application programming interface (API); and
obtaining an application identity for the installed application from the API.

11. A method for customizing an application installed on a system, the method comprising:
defining a deployment manifest data structure;
associating the deployment manifest with the application; and
specifying customization data within the deployment manifest.

12. The method of claim 11, wherein the application's bits are maintained immutable.

13. The method of claim 11, wherein the application is a customized application.

14. The method of claim 13, wherein the application's bits are maintained immutable.
